# EUROPEAN PATENT SPECIFICATION

(11) **EP 1 343 947 B1**
(45) Date of publication and mention of the grant of the patent: **02.11.2006**
(21) Application number: 01271486.1
(22) Date of filing: 17.12.2001
(51) Int. Cl.: E21B 7/14

(54) **IGNITER FOR OXYGEN LANCE FOR THERMAL CUTTING, DRILLING ETC.**
ZÜNDVORRICHTUNG FÜR SAUERSTOFFLANZE ZUM THERMISCHEN SCHNEIDEN, BOHREN USW.
DISPOSITIF DE MISE A FEU POUR LANCE A OXYGENE UTILISEE POUR LE COUPAGE THERMIQUE, PER AGE ETC.

(30) Priority: 21.12.2000 SE 0004743
(43) Date of publication of application: 17.09.2003
(73) Proprietor: Ferrox AB, 712 82 Grythyttan (SE)
(72) Inventor: ERICKSSON, Börje, S-691 54 Karlskoga (SE); ERIKSSON, Lennart, S-691 35 Karlskoga (SE)
(74) Representative: Falk, Bengt
(86) International application number: PCT/SE2001/002793
(87) International publication number: WO 2002/050396

(56) References cited:
- US-A- 1 965 275
- US-A- 2 634 196
- US-A- 5 580 515
- US-A- 5 622 672

## Description

The present invention relates to a new method of igniting an oxygen lance, wherein highly concentrated oxygen from the lance is supplied to a fine-grained pyrophoric metal powder which ignites on contact with the oxygen and during its combustion ignites an ignition charge of metal and together with the latter ensures ignition of the lance.

The method is mainly of the type which works without a supplementary electric arc.

The invention also relates to an oxygen lance igniter functioning in accordance with the method, comprising a sleeve with an inner diameter which is greater than the mouth of the lance, which sleeve is intended, before the lance is started up, to be slipped over the mouth of the lance until it reaches a specific mouth position, which oxygen lance igniter further comprises a pyrophoric initiating charge.

A particular advantage of the method and the device (the igniter) according to the invention is that it can be used both in the air and under water.

Oxygen lances of the type concerned here, which are used mainly for thermal cutting and drilling, and moreover under water, in scrap yards and also within the steel industry, exist in two basic types in principle, the first of which and the type mainly concerned here works with only oxygen and therefore requires some type of separate ignition function, while the second main type works with oxygen and its own supplementary electric arc.

One problem which oxygen lances which do not have their own arc have hitherto suffered from is that they have always been difficult to ignite. In oxygen lances which have their own arc, the arc is used for igniting the lance. There is also a variant in between, in which a separate electric arc igniter is used for igniting the lance, which is then used completely separately from the igniter as this is no longer required after ignition.

The difficulty of igniting oxygen lances without access to an electric arc resides in the fact that the lance tip must be heated up in another way to the ignition temperature of the iron, that is to say around 1050°C. Use has previously been made of a number of different methods as far as starting up oxygen lances without access to electric arcs is concerned, and probably the two oldest methods are with an ordinary gas welding torch or with a coal fire. However, neither of these methods has been especially popular, because the person starting the lance is then compelled to remain very close to the mouth of the lance and, if he should happen to move too close to it, he may be struck by molten iron spray.

A somewhat more refined device or igniter for igniting oxygen lances which do not have access to their own electric arc is described in SE 7605274-5. The igniter described therein consists of a sleeve, open at one of its ends, of greater cross-sectional diameter than the mouth of the lance. The sleeve is intended to be slipped over the mouth of the lance and retained there by a spring adapted for the purpose. The sleeve itself is then at least partly filled with a metal powder and also a primer which can be ignited via an ignition duct from the otherwise closed end of the sleeve. It emerges from the description that it is to be possible to ignite the primer either by means of a notch-sensitive composition, arranged immediately outside the closed end of the sleeve or by virtue of the ignition duct containing chemicals which themselves ignite above the ambient temperature, so that it is possible to ignite the igniter by means of a small temperature increase. It is also indicated in the text that the igniter could contain pyrophoric substances, that is to say those which ignite when oxygen is supplied, and in that case that these would be added to the ignition composition or primer and in this way bring about auto-ignition when the oxygen supply is opened. However, the text contains no proposals for suitable pyrophoric substances which could be used for this purpose. In quite general terms, it could probably be said that to the extent that the igniter described in this patent contains such "chemicals which themselves ignite above the ambient temperature, so that it is possible to ignite by means of a small temperature increase", the igniter in question appears not to be capable of meeting necessary safety requirements because in that case it must have a strong tendency towards accidental ignition.

Another similar ignition device for oxygen lances is described in printed Swedish patent application 8704421-0, in which it is stated that the combustion powder, that is to say the powder charge which serves for the actual heating up to the ignition temperature of the lance, is suitably to consist of aluminium powder and that the surrounding sleeve is to be provided with a stop which regulates how far the lance can be inserted into the sleeve, and also that the latter can also contain a stop mass consisting of, for example, cotton, and also that it is possible to arrange a pyrotechnic delay between a fuse head arranged at the mainly closed end of the sleeve and the primer arranged inside the sleeve, which is therefore in its turn to ignite the combustion powder. This arrangement is in order that the person igniting the outer primer will be able to get out of the way. In other respects, the same comments apply as for the device described previously, namely that, as it has to contain not inconsiderable quantities of pyrotechnic material, the special provisions applying for such material must also apply for these igniters.

For further reference see document US-A-5 622 672, which discloses a method of igniting an oxygen lance, wherein highly concentrated oxygen from the lance is supplied to a phyrophoric metal powder contained in a metallic, air-tight container, which container is pierced so that the phyrophoric metal powder ignites on contact with the oxygen and during its combustion ignites said container and so ensures ignition of said lance, and also document US-A-3 275 484, which discloses a phyrophoric charge being zirconium or titanium.

Oxygen lance igniters of the general type described in the abovementioned patent specifications, with pyrotechnic charges as the start-up medium, have been available on the market for a number of years, and they have in practical use been found to have a rather high failure rate and have required no little instinctive feeling on the part of the person handling the lance with regard to knowing how rapidly to increase the oxygen supply to full capacity.

The present invention relates then to a new type of oxygen lance igniter which is started up only by means of the oxygen application and which does not contain any pyrotechnic primer and therefore does not have to be dependent on any special safety regulations.

This is because, in accordance with the method and the device according to the invention, previous pure pyrotechnic primers for initiating the ignition charges (the combustion powder) of the oxygen lance igniters are replaced by a small quantity of pyrophoric metal powder such as zirconium or titanium. Theoretically, phosphorus which is clearly pyrophoric could also function, but phosphorus ignites in air and is therefore difficult to handle under normal conditions and therefore unsuitable in this context. Zirconium on the other hand, which is the best alternative in our opinion, is pyrophoric and ignites at high oxygen contents on condition that it has a sufficiently large surface area, but is no more flammable than ordinary wood in air, where the oxygen content is normally slightly more than 20%. It is also pertinent that oxygen lances of the type concerned here are supplied with either completely pure oxygen or oxygen mixed with small quantities of inert gas, for example roughly 5% argon, and the oxygen concentrations are more than adequate to ignite zirconium or titanium powder with a sufficiently large active surface area.

The oxygen lance igniter characteristic of the invention can therefore quite generally be said to consist of an ignition charge consisting of metal powder (combustion powder) which is enclosed in a sleeve, closed at one end, with an inner diameter which is greater than the outer diameter of the oxygen lance, this sleeve being intended, when the lance is to be started up, to be slipped over the mouth of the lance until it reaches a certain specific depth, and an initiating charge of powdered pyrophoric metal such as zirconium or titanium also being arranged in this sleeve, in addition to the ignition charge of metal powder, on top of this ignition charge, that is to say at the end facing the oxygen lance. It is not large quantities of pyrophoric metal which are required for this purpose either. If zirconium, the best alternative in our opinion, is selected, roughly 0.05-0.5 g fine-grained pure zirconium with a particle size of 2-6 im is required for this purpose. The initiating charge rapidly ignites the ignition charge used by us in the form of 11 to 15 g of an iron/aluminium powder mixture, in which the components iron and aluminium are present in the weight ratio 1:1. We were also able to establish that this ignition charge is most effective if it comprises a more fine-grained first part charge and a somewhat more coarse-grained second part charge. Half the weight of a first part charge produced by us of roughly 4.0 g therefore consists of aluminium powder with a particle size of roughly 0.1 mm, and the other half of its weight consists of iron powder with a particle size of roughly 0.01 mm, while the second part charge consisted of 4.5 g aluminium pellets with a particle size of 1-3 mm and 4.5 g iron filings with a particle size of 0.4-0.8 mm.

With the oxygen lance igniter characteristic of the invention, it has now been possible to make the start-up of any type of oxygen lance not provided with an arc as easy as should on the whole be possible. As the oxygen lance igniter does not contain any pure pyrotechnics, no special storage restrictions are required either. When the oxygen lance igniter is started up, the oxygen lance igniter is merely positioned in the place intended for it over the mouth of the lance, after which the oxygen is turned on, the high oxygen content resulting in the pyrophoric initiating charge in the form of, for example, metallic pure powdered zirconium igniting and in turn igniting the ignition charge consisting of iron/aluminium powder, which in turn starts up the oxygen/iron combustion and ignites the lance. The reliable start-up of any oxygen lance which is achieved in this way is of course to some extent a consequence of the high combustion temperature of the zirconium of roughly 4900°C.

In addition to the basic idea of using a pyrophoric metal powder such as zirconium or titanium for the purpose concerned here, the invention also includes a detailed design of the oxygen lance igniter itself. In the first place, a pyrophoric metal powder such as zirconium or titanium is required, and it must be held in position at the same time as a sufficiently large surface area of it must be directly available for contact with the oxygen when this is turned on. According to the invention, we meet these requirements by placing the pyrophoric metal powder in a gas-permeable, preferably combustible container directly on top of the ignition charge. As the material for this container, we use ordinary machine felt, from which we form a cup or container with a separate cover of its own and an inner volume which considerably exceeds the minimum volume which would be required for the pyrophoric metal powder. In reality, we have found that it is advantageous if the greater part of the pyrophoric metal powder quite simply forms a powder coating on the inside of the felt container. In this way, we can utilize the large powder surface area which is in this way made available for direct contact with the oxygen. Directly below this felt container, the actual ignition charge is then arranged, preferably in the form of a more fine-grained first part mixture of iron/aluminium powder and a second more coarse-grained mixture of the same metals, in which connection these part mixtures can be the same size in terms of weight. We have also found that there is no reason specially to separate the two part mixtures from one another but that it is entirely satisfactory if these are filled one after the other into their common space in the igniter. On the contrary, it can even be a certain advantage if limited mixing takes place in the boundary layer between the two part mixtures.

The invention has been defined in all its features in the patent claims below, and it will now be described in only somewhat greater detail with reference to a representative design of the same shown in the accompanying figures, in which
Fig. 1 shows a sectional inclined projection of an igniter;
Fig. 2 shows a sectional view of an igniter placed over the lance tip on an oxygen lance which is to be ignited;
Fig. 3 shows the various component parts of an igniter in an inclined projection and on smaller scale, and
Fig. 4 shows a sectional view of an igniter intended for underwater use mounted on a lance tip intended therefor.

Corresponding components have been given the same reference numbers in the different figures irrespective of how and on what scale they are illustrated.

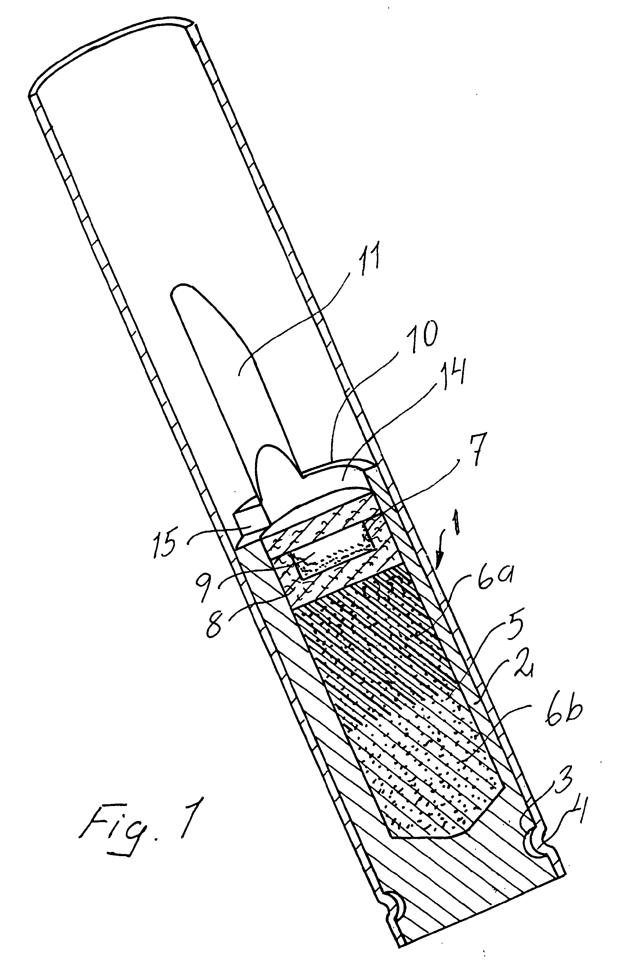

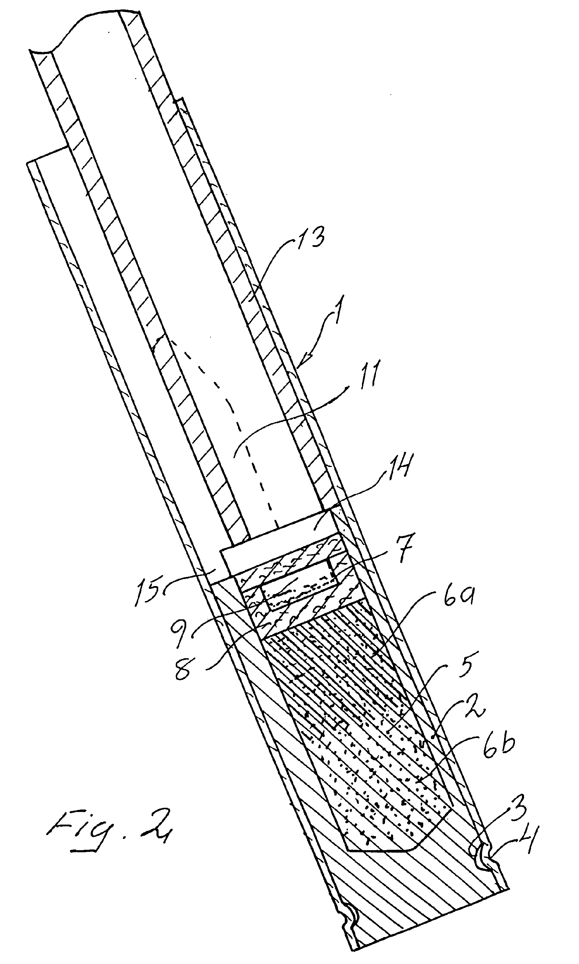

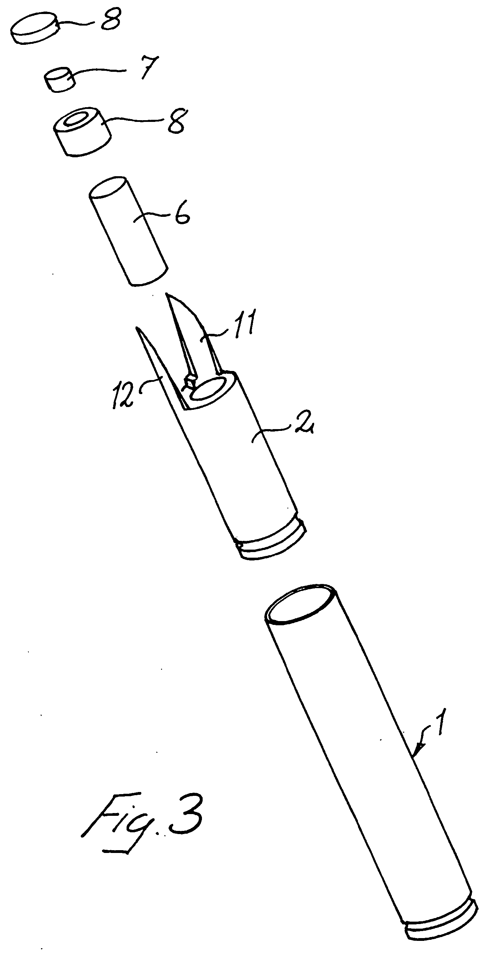

As can be seen from Figures 1-3, the outer part of the lance igniter according to the invention consists of an outer tube 1 and an inner sleeve 2 which is fixed in the outer tube 1 by means of an upset indentation 4, preferably extending all the way round, accommodated in a groove 3 in the sleeve 2. The inner sleeve 2 is also provided with an inner boring 5 in which two part charges consisting of mixtures of iron/aluminium powder of different particle size are arranged. In the figure, the more fine-grained part charge has the reference 6a and the more coarse-grained part charge has the reference 6b. Together, these constitute the actual ignition charge, but, in order to set this going, the initiating charge characteristic of the invention is required, which therefore consists of roughly 0.15 g finely divided zirconium 7 arranged in a gas-permeable container or cup 8 provided with a cover and, in the example shown, made from machine felt. The inner space 9 of the cup 8 is considerably greater than the volume of the zirconium powder 7 itself, and the powder lies freely in the space where it forms what could be described as a powder coating of the inner walls of the space 9. The inner sleeve 2 is also provided with a stop edge 10, the function of which is, as shown in Fig. 2, to ensure that the oxygen lance designated by 13 can be guided into this stop position but no further. The inner sleeve 2 is also provided with two preferably somewhat resilient guide tongues 11 and 12 (see Fig. 3), the function of which is, as can be seen from Fig. 2, to guide the mouth of the lance 13 in eccentrically along one inner edge of the tube 1 and also to retain it in this position during handling before ignition. By virtue of the positioning of the stop edge 10 between the outer end of the lance 13 and the cover of the cup 8, a gap space 14 is formed between the cover and the mouth of the lance, and this gap space is also provided with an outlet 15 located between the guide tongues 11 and 12, and this is the way the oxygen can pass through during the initial stage of the ignition process, then passing back through on the outside of the lance.

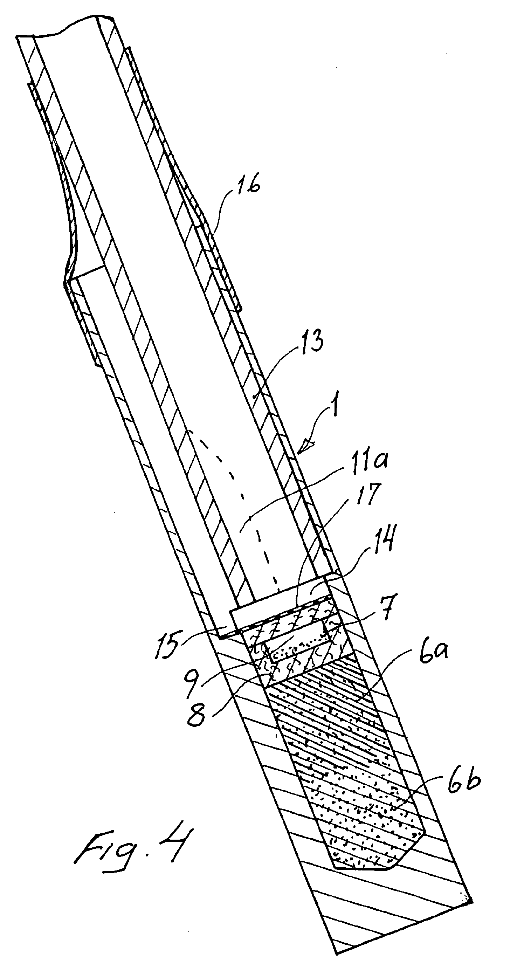

In order to ignite the lance, it is therefore necessary for the igniter to be slipped onto the mouth of the lance into the stop position shown in Fig. 2, after which the oxygen is turned on in the lance. What happens then is that the greater part of the oxygen follows the gap 14 and leaves through the outlet 15 at the same time as some of the gas flows through the felt cover of the cup 8 and reacts with the zirconium powder which ignites and in turn ignites the ignition charge 6 which ignites the oxygen/iron reaction, and the lance is ready for use.
The variant shown in Fig. 4 of the igniter according to the invention has an outer casing la in which the tube 1 and the sleeve 2 from the variant shown in Figs 1-3 have been combined into a unit. In this unit 1a, the guide tongues 11 and 12 have been replaced by firm guide projections designated here by 11a. The igniter is also adapted for underwater use and is therefore provided with an elastic sealing collar 16 and could also be provided with a protective foil 17 on top of the capsule 8 with its pyrophoric initiating charge. In such a case, the strength of the protective foil 17 is to be adapted in such a manner that it is blown to pieces when the oxygen is turned on. Both the protective foil and the sealing collar could of course also be used above water.

A further possible variant which is not actually illustrated in a figure is to assemble a lance part with an igniter to form a single unit. This variant could be appropriate when it is mainly a large number of very short lances intended for use with relatively short or long breaks between uses which is required. One possible such area of activity could be work on shipwrecks.

## Claims

1. Method of igniting an oxygen lance (13), wherein highly concentrated oxygen from the lance (13) is supplied to a fine-grained pyrophoric metal powder which ignites on contact with the oxygen and during its combustion ignites an ignition charge of metal (6a, 6b) and together with the latter ensures ignition of the lance (13) **characterized in that** the fine-grained pyrophoric metal powder, which consists of zirconium (7) or titanium powder, is arranged in a gas-permeable, preferably combustible container (8) which is in turn arranged between the oxygen lance (13) and the ignition charge (6a, 6b), which consists of a metal powder mixture, after which the highly concentrated oxygen is supplied to the zirconium (7) or titanium powder through the gas-permeable container (8) and thereby igniting said zirconium (7) or titanium powder when the lance is to be started up.

2. Oxygen lance igniter functioning in accordance with the method according to Claim 1, comprising a sleeve (1) with an inner diameter which is greater than the mouth of the lance (13), which sleeve is intended, before the lance is started up, to be slipped over the mouth of the lance until it reaches a specific mouth position (10), which oxygen lance igniter further comprises a pyrophoric initiating charge (7), and an ignition charge (6a, 6b) consisting of metal powder, **characterized in that** the ignition charge (6a, 6b) is enclosed in the sleeve (1) having an inner diameter which is greater than the mouth of the lance (13), which sleeve (1) also contains, in addition to said ignition charge (6a, 6b) consisting of metal powder, the pyrophoric initiating charge (7) which is in the form of pure metallic zirconium (7) or titanium arranged in a gas-permeable, preferably combustible container (8).

3. Oxygen lance igniter according to Claim 2, **characterized in that** said gas-permeable, preferably combustible container (8) is arranged between the mouth position (10) of the oxygen lance (13) in the sleeve and the ignition charge (6a, 6b).

4. Oxygen lance igniter according to Claim 3, **characterized in that** said initiating charge (7) consists of 0.05-0.5 g pure metallic powdered zirconium with a particle size of roughly 2-6 µm.

5. Oxygen lance igniter according to either Claim 3 or 4, **characterized in that** said gas-permeable container (8), in which the pyrophoric metal powder (7) is stored at the outset, is made of porous felt.

6. Oxygen lance igniter according to Claim 5, **characterized in that** the container (8) made of gas-permeable material is designed as a cup made of porous felt provided with a fully covering cover made of the same felt material, the inner volume (9) of the cup considerably exceeding the total volume of the pyrophoric metal powder (7).

7. Oxygen lance igniter according to any one of Claims 1-6, **characterized in that** the ignition charge (6a, 6b) consists of a mixture of iron and aluminium powder.

8. Oxygen lance igniter according to Claim 7, **characterized in that** the ignition charge (6a, 6b) comprises a first more fine-grained part charge (6a) and a second somewhat more coarse-grained part charge (6b), both these part charges containing iron and aluminium in the weight ratio 1:1.

9. Oxygen lance igniter according to Claim 8, **characterized in that** the ignition charge (6a, 6b) included therein comprises a first part charge (6a) containing iron powder with particles of the order of size of 0.01 mm and aluminium particles of the order of size of 0.1 mm and also a second more coarse-grained part charge (6b) containing iron powder with particles of the order of size of 0.4-0.8 mm and aluminium granules of the order of size of 1-3 mm.

10. Oxygen lance igniter according to Claim 9, **characterized in that** the more fine-grained part charge (6a) of the ignition charge (6a, 6b) is arranged directly adjacent to the gas-permeable container in which the pyrophoric metal powder (7) is arranged.

11. Oxygen lance igniter according to any one of Claims 1-9, **characterized in that** it consists of an outer tube part (1) open at both ends, with an inner diameter greater than the oxygen lance, an inner sleeve (2) which is fixed in said outer tube part by means of an upset indentation (4) accommodated in a groove (3) intended therefore and is completely closed at one end, and in which the ignition and initiating charges (6a, 6b) are inserted into an inner duct or boring (5) arranged therein, said inner sleeve (2) also having at least two guide tongues (11, 12) intended to guide the mouth of the oxygen lance (13) in and hold it firmly directly above the inner duct (5) of the sleeve, and also a stop flange (10) which limits the insertion of the lance into the sleeve to a position before it reaches the initiating charge, and also a gas outflow opening (15) which allows the gas flowing out of the lance to flow out of the space directly above the initiating charge and back past the lance.

12. Oxygen lance igniter (1a) according to any one of the preceding claims, intended primarily for underwater use, **characterized in that** it comprises an elastic sealing collar (16) surrounding its end facing the lance (13) and the immediate mouth of the lance, and also a protective foil (17) which at the outset covers the pyrophoric metal powder (7) and the strength of which is selected in such a manner that it is blown to pieces when the oxygen is supplied.

## Patentansprüche

1. Verfahren zum Zünden einer Sauerstofflanze (13), wobei hochkonzentrierter Sauerstoff von der Lanze (13) zu einem feinkörnigen, selbstentzündlichem Metallpulver geleitet wird, das bei Berührung mit dem Sauerstoff zündet und während seiner Verbrennung eine Zündladung aus Metall (6a, 6b) zündet und zusammen mit letzterer das Zünden der Lanze (13) sicherstellt, **dadurch gekennzeichnet, dass** das feinkörnige, selbstentzündliche Metallpulver, welches aus Zirkon (7) oder Titanpulver besteht, in einem gasdurchlässigen, vorzugsweise verbrennbaren Behälter (8) angeordnet ist, der seinerseits zwischen der Sauerstofflanze (13) und der Zündladung (6a, 6b) angeordnet ist, welche aus einem Metallpulvergemisch besteht, wonach der hochkonzentrierte Sauerstoff durch den gasdurchlässigen Behälter (8) zum Zirkon (7) oder Titanpulver geleitet wird und **dadurch** das Zirkon (7) oder Titanpulver zündet, wenn die Lanze angefahren wird.

2. Zündvorrichtung für Sauerstofflanze in Übereinstimmung mit dem Verfahren gemäß Anspruch 1, mit einer Hülse (1), deren Innendurchmesser größer als die Mündung der Lanze (13) ist, wobei die Hülse vor dem Anfahren der Lanze über die Mündung der Lanze so weit geschoben wird, bis sie eine spezifische Mündungsposition (10) erreicht, wobei die Zündvorrichtung für die Sauerstofflanze ferner eine selbstentzündliche Zündladung (7) und eine Zündladung (6a, 6b) bestehend aus Metallpulver aufweist, **dadurch gekennzeichnet, dass** die Zündladung (6a, 6b) in der Hülse (1) eingeschlossen ist, die einen Innendurchmesser hat, welcher größer als die Mündung der Lanze (13) ist, wobei die Hülse (1) auch zusätzlich zu der Zündladung (6a, 6b) bestehend aus Metallpulver die selbstentzündliche Zündladung (7) enthält, die in Form eines reinmetallischen Zirkons (7) oder Titans ist, welche in einem gasdurchlässigen, vorzugsweise verbrennbaren Behälter (8) angeordnet ist.

3. Zündvorrichtung für Sauerstofflanze nach Anspruch 2, **dadurch gekennzeichnet, dass** der gasdurchlässige, vorzugsweise verbrennbare Behälter (8) zwischen der Mündungsposition (10) der Sauerstofflanze (13) in der Hülse und der Zündladung (6a, 6b) angeordnet ist.

4. Zündvorrichtung für Sauerstofflanze nach Anspruch 3, **dadurch gekennzeichnet, dass** die Zündladung (7) aus 0,05 - 0,5 g reinem, metallischem, pulverisiertem Zirkon mit einer Teilchengröße von ungefähr 2-6 µm besteht.

5. Zündvorrichtung für Sauerstofflanze nach Anspruch 3 oder 4, **dadurch gekennzeichnet, dass** der gasdurchlässige Behälter (8), in welchem das selbstentzündliche Metallpulver (7) am Anfang aufgenommen ist, aus porösem Filz besteht.

6. Zündvorrichtung für Sauerstofflanze nach Anspruch 5, **dadurch gekennzeichnet, dass** der Behälter (8) aus gasdurchlässigem Material als ein Becher gestaltet ist, bestehend aus porösem Filz, der mit einer vollständig abdeckenden Abdeckung, bestehend aus dem gleichen Filzmaterial versehen ist, wobei das Innenvolumen (9) des Bechers das Gesamtvolumen des selbstentzündlichen Metallpulvers (7) beträchtlich überschreitet.

7. Zündvorrichtung für Sauerstofflanze nach einem der Ansprüche 1 bis 6, **dadurch gekennzeichnet, dass** die Zündladung (6a, 6b) aus einem Gemisch aus Eisen - und Aluminiumpulver besteht.

8. Zündvorrichtung für Sauerstofflanze nach Anspruch 7, **dadurch gekennzeichnet, dass** die Zündladung (6a, 6b) eine erste, feinkörnigere Teilladung (6a) und eine zweite, etwas grobkörnigere Teilladung (6b) aufweist, wobei diese beiden Teilladungen Eisen und Aluminium im Gewichtsverhältnis von 1:1 enthalten.

9. Zündvorrichtung für Sauerstofflanze nach Anspruch 8, **dadurch gekennzeichnet, dass** die darin enthaltene Zündladung (6a, 6b) eine erste Teilladung (6a), die Eisenpulver mit Teilchen in der Größenordnung von 0,01 mm und Aluminiumteilchen in der Größenordnung von 0,1 mm, sowie auch eine zweite grobkörnigere Teilladung (6b) enthält, die Eisenpulver mit einer Teilchengröße in der Größenordnung von 0,4-0,8 mm und Aluminiumgranulat in der Größenordnung von 1-3 mm enthält.

10. Zündvorrichtung für Sauerstofflanze nach Anspruch 9, **dadurch gekennzeichnet, dass** die feinkörnigere Teilladung (6a) der Zündladung (6a, 6b) direkt neben dem gasdurchlässigen Behälter, in welchem das selbstentzündliche Metallpulver (7) angeordnet ist, angeordnet ist.

11. Zündvorrichtung für Sauerstofflanze nach einem der Ansprüche 1 bis 9, **dadurch gekennzeichnet, dass** diese besteht aus einem an beiden Enden offenen Außenrohrteil (1), dessen Innendurchmesser größer als die Sauerstofflanze ist, einer inneren Hülse (2), die an dem Außenrohrteil mittels einer gestauchten Einkerbung (4), die in einer dafür vorgesehenen Nut (3) aufgenommen ist, befestigt ist und an einem Ende vollständig geschlossen ist, und in welches die Zünd- und Initiierungsladungen (6a, 6b) in eine darin angeordnete innere Leitung oder Bohrung (5) eingesetzt sind, wobei die Innenhülse (2) auch wenigstens zwei Führungszungen (11, 12) hat, die dazu dienen, die Mündung der Sauerstofflanze (13) einzuführen und sie fest direkt oberhalb der inneren Leitung (5) der Hülse zu halten, und auch einen Stoppflansch (10) hat, der das Einsetzen der Lanze in die Hülse in eine Position vor dem Erreichen der Zündauslösungsladung begrenzt, und auch eine Gasausströmöffnung (15) hat, die ermöglicht, das das Gas, welches aus der Lanze strömt, in den Raum direkt oberhalb der Auslöseladung und zurück hinter die Lanze strömen kann.

12. Zündvorrichtung (1a) für Sauerstofflanze nach einem der vorstehenden Ansprüche, die primär für Unterwasserverwendung dient, **dadurch gekennzeichnet, dass** sie eine elastische Abdichtmanschette (16) aufweist, die ihr Ende, welches der Lanze (13) zugewandt ist und die unmittelbare Mündung der Lanze umgibt, und auch eine Schutzfolie (17) aufweist, die das selbstentzündliche Metallpulver (7) am Anfang abdeckt, und deren Festigkeit so gewählt ist, dass sie bei Zufuhr von Sauerstoff in Stücke geblasen wird.

## Revendications

1. Procédé de mise à feu d'une lance à oxygène (13), dans lequel l'oxygène hautement concentré de la lance (13) est amené à une poudre métallique pyrophorique à grain fin qui s'enflamme au contact de l'oxygène et pendant sa combustion allume une charge de mise à feu de métal (6a, 6b) et conjointement au premier assure l'allumage de la lance (13) **caractérisé en ce que** la poudre métallique pyrophorique à grain fin, qui consiste en une poudre de zirconium (7) ou de titane, est disposée dans un récipient (8) de préférence combustible, perméable au gaz qui est à son tour placé entre la lance à oxygène (13) et la charge de mise à feu (6a, 6b), qui consiste en un mélange de poudre métallique, après quoi l'oxygène hautement concentré est amené à la poudre de zirconium (7) ou de titane au travers du récipient (8) perméable au gaz et enflammant ainsi ladite poudre de zirconium (7) ou de titane lorsque la lance doit être mise en marche.

2. Dispositif de mise à feu de lance à oxygène fonctionnant conformément au procédé selon la revendication 1, comprenant un tube (1) avec un diamètre interne qui est supérieur à celui du bec de la lance (13), lequel tube est destiné, avant que la lance ne démarre, à être glissé sur le bec de la lance jusqu'à ce qu'il atteigne une position du bec spécifique (10), lequel dispositif de mise à feu de lance à oxygène comprend en outre une charge d'amorçage pyrophorique (7), et une charge de mise à feu (6a, 6b) consistant en une poudre métallique, **caractérisé en ce que** la charge de mise à feu (6a, 6b) est enfermée dans le tube (1) ayant un diamètre interne qui est supérieur à celui du bec de la lance (13), lequel tube (1) contient également, en plus de ladite charge de mise à feu (6a, 6b) consistant en une poudre métallique, la charge d'amorçage pyrophorique (7) qui est sous la forme de zirconium (7) ou de titane métallique pur placé dans un récipient (8) de préférence combustible, perméable au gaz.

3. Dispositif de mise à feu de lance à oxygène selon la revendication 2, **caractérisé en ce que** ledit récipient (8) de préférence combustible, perméable au gaz est placé entre la position du bec (10) de la lance à oxygène (13) dans le tube et la charge de mise à feu (6a, 6b).

4. Dispositif de mise à feu de lance à oxygène selon la revendication 3, **caractérisé en ce que** la dite charge d'amorçage (7) comprend de 0,05 à 0,5 g de zirconium métallique pur en poudre avec une taille de particule d'environ de 2 à 6 µm.

5. Dispositif de mise à feu de lance à oxygène selon la revendication 3 ou 4, **caractérisé en ce que** ledit récipient (8) perméable au gaz, dans lequel la poudre de métal pyrophorique (7) est stockée au début, est fait de feutre poreux.

6. Dispositif de mise à feu de lance à oxygène selon la revendication 5, **caractérisé en ce que** le récipient (8) constitué d'un matériau perméable au gaz est conçu sous la forme d'une coupelle faite de feutre poreux fournie avec un couvercle du même matériau en feutre la recouvrant complètement, le volume interne (9) de la coupelle dépassant considérablement le volume total de la poudre de métal pyrophorique (7).

7. Dispositif de mise à feu de lance à oxygène selon l'une quelconque des revendications 1 à 6, **caractérisé en ce que** la charge de mise à feu (6a, 6b) consiste en un mélange de poudre de fer et d'aluminium.

8. Dispositif de mise à feu de lance à oxygène selon la revendication 7, **caractérisé en ce que** la charge de mise à feu (6a, 6b) comprend un premier élément de charge à grain plus fin (6a) et un second élément de charge à grain quelque peu plus grossier (6b), ces deux éléments de charge contenant du fer et de l'aluminium dans un rapport pondéral de 1/1.

9. Dispositif de mise à feu de lance à oxygène selon la revendication 8, **caractérisé en ce que** la charge de mise à feu (6a, 6b) incluse ici comprend un premier élément de charge (6a) contenant de la poudre de fer avec des particules d'une taille de l'ordre de 0,01 mm et des particules d'aluminium d'une taille de l'ordre de 0,1 mm et également un second élément de charge (6b) à grain plus grossier contenant de la poudre de fer avec des particules d'une taille de l'ordre de 0,4 à 0,8 mm et des granules d'aluminium d'une taille de l'ordre de 1 à 3 mm.

10. Dispositif de mise à feu de lance à oxygène selon la revendication 9, **caractérisé en ce que** l'élément de charge à grain plus fin (6a) de la charge de mise à feu (6a, 6b) est placé directement adjacent au récipient perméable au gaz dans lequel la poudre de métal pyrophorique (7) est disposée.

11. Dispositif de mise à feu de lance à oxygène selon l'une quelconque des revendications 1 à 9, **caractérisé en ce qu'**il comprend un élément de tube externe (1) ouvert aux deux extrémités, avec un diamètre interne supérieur à celui de la lance à oxygène, un tube interne (2) qui est fixé dans ledit élément de tube externe aux moyens d'une entaille à partie refoulée (4) logé dans un trou (3) conçu à cet effet et qui est complètement fermé à une extrémité, et dans lequel les charges d'amorçage et de mise à feu (6a, 6b) sont insérées dans un conduit ou un alésage interne (5) qui y est placé, ledit tube interne (2) ayant aussi au moins deux languettes de guidage (11, 12) destinées à guider le bec de la lance à oxygène (13) à l'intérieur et de la maintenir fermement directement au-dessus du conduit interne (5) du tube, et également une collerette de butée (10) qui limite l'insertion de la lance dans le tube à une position avant qu'elle atteigne la charge d'amorçage, et aussi une ouverture de sortie de gaz (15) qui permet au gaz sortant de la lance de s'écouler de l'espace directement au-dessus de la charge d'amorçage et de passer à l'arrière de la lance.

12. Dispositif de mise à feu de lance à oxygène (1a) selon l'une quelconque des revendications précédentes, destiné essentiellement à un usage subaquatique, **caractérisé en ce qu'**il comprend un collier étanche (16) élastique entourant son extrémité faisant face à la lance (13) et au bec immédiat de la lance, et également une feuille protectrice (17) qui au début recouvre la poudre métallique pyrophorique (7) et dont la résistance est choisie de manière telle qu'elle explose en morceaux lorsque l'oxygène est fourni.
